# EUROPEAN PATENT APPLICATION

(11) **EP 4 753 167 A1**
(43) Date of publication of application: **03.06.2026**
(21) Application number: 24844618.9
(22) Date of filing: 10.07.2024
(51) Int. Cl.: H04B 7/185

(54) **SATELLITE COMMUNICATION METHOD, APPARATUS, CHIP AND MODULE DEVICE**

(30) Priority: 25.07.2023 CN 202310922041
(71) Applicant: Spreadtrum Communications (Shanghai) Co., Ltd., Shanghai 201203 (CN)
(72) Inventor: LIU, Xu, Shanghai 201203 (CN)
(74) Representative: Ipsilon
(86) International application number: PCT/CN2024/104686
(87) International publication number: WO 2025/020925

(57) **Abstract**

Disclosed in the present application are a satellite communication method, an apparatus, a chip and a module device, the method comprising: a terminal device receiving availability information of a feed link from a network device, the availability information of the feed link being used for indicating whether the feed link is available; and, when the availability information of the feed link indicates that the feed link is unavailable, releasing a radio resource control (RRC) connection. In the case of feed link failures, the method described in the present application helps to save the power consumption of terminal devices.

## Description

The present application claims priority to CN Patent Application No. 202310922041.5, entitled as "SATELLITE COMMUNICATION METHOD, APPARATUS, CHIP, AND MODULE DEVICE", filed with the China National Intellectual Property Administration on July 25, 2023, the entirety of which is incorporated herein by reference.

### FIELD OF TECHNOLOGY

The present application relates to communication technology, and particularly to a method, apparatus, chip, and module device for satellite communication.

### BACKGROUND

Connection links between satellites and terminal devices (also known as the service links) and links between satellites and terrestrial gateway stations (also known as the feeder links) are included in a satellite communication system. Among them, data/signaling transmission on the service link is based on an air interface Uu protocol, while data/signaling transmission between a core network device and a base station (or a satellite) on the feeder link is through an NG interface.

In the event of a failure in the feeder link, such as due to a terrestrial gateway failure or software upgrade, the terminal device suddenly becomes unable to obtain network services or establish network connections. For the terminal device side, the terminal device is unable to perceive the failure of the feeder link and will continuously request to establish a connection to obtain network services, resulting in an increase in power consumption.

### SUMMARY

The embodiments of the present application provide a method, apparatus, chip, and module device for satellite communication. The method provided in the present application facilitates power consumption saving at terminal devices in the event of a feeder link failure.

In a first aspect, the embodiments of the present application provide a satellite communication method, which includes: a terminal device receiving availability information of a feeder link from a network device, the availability information of the feeder link being used to indicate whether the feeder link is available.

Based on the method provided in the first aspect, the terminal device can perceive whether the feeder link is available according to the availability information of the feeder link, thereby being prevented from requesting a connection to obtain network services when the feeder link is unavailable, and unnecessary overhead being avoided at the terminal device, which is conducive to power consumption saving at the terminal device.

In one implementation, the availability information of the feeder link includes state information on availability of the feeder link and/or time information on availability of the feeder link; wherein, the state information on availability includes an available state or an unavailable state, and the time information on availability includes a first time period for the available state and/or a second time period for the unavailable state.

In one implementation, when the availability information of the feeder link indicates that the feeder link is unavailable, the terminal device releases a radio resource control RRC connection. In the implementation, when the feeder link is unavailable, the terminal devices in connected state can perceive that the feeder link is in unavailable state according to the received availability information of the feeder link, and release the RRC connection. Compared to the terminal device constantly requesting to establish a connection to obtain network services since the terminal device cannot perceive the failure of the feeder link when the feeder link is unavailable, the terminal device can avoid unnecessary overhead, which contributes to power consumption saving at terminal devices.

In one implementation, the availability information of the feeder link includes a first time period. Furthermore, a terminal device can receive release indication information from a network device within a first time before the ending time of the first time period, and release the RRC connection according to the release indication information.

In one implementation, the availability information of the feeder link includes a second time period. Furthermore, a terminal device can receive release indication information from a network device within a second time before the beginning time of the second time period, and release the RRC connection according to the release indication information.

In one implementation, the availability information of the feeder link includes a first time period. Furthermore, a terminal device sends a request message to a network device for release of the RRC connection within a first time before the ending time of the first time period. The terminal device receives release indication information from the network device and releases the RRC connection according to the release indication information.

In one implementation, the availability information of the feeder link includes a second time period. Furthermore, a terminal device sends a request message to a network device for release of the RRC connection within a second time before the beginning time of the second time period. The terminal device receives release indication information from the network device and releases the RRC connection according to the release indication information.

In one implementation, the availability information of the feeder link includes a first time period. Furthermore, the terminal device can send a request message for resumption of RRC connection to a network device within the first time period. The terminal device receives an RRC resumption confirmation message from the network device and resumes the RRC connection according to the RRC resumption confirmation message.

In one implementation, the availability information of the feeder link is born in broadcast information, or the availability information of the feeder link is carried in dedicated signaling.

In one implementation, a random access request is sent to the network device when the feeder link is available. In the implementation, the terminal device in idle state can perceive whether the feeder link is available or unavailable according to the received availability information of the feeder link, so that the terminal device can only send the random access request to the network device when the feeder link is available. Compared to the terminal device constantly sending the random access request to establish a connection and obtain network services since the terminal device cannot perceive the failure of the feeder link when the feeder link fails, the terminal device can avoid unnecessary overhead, which contributes to power consumption saving at the terminal device.

In one implementation, the availability information of the feeder link includes a first time period. A terminal device can send a random access request to a network device within the first time period.

In one implementation, the availability information of the feeder link includes a second time period. A terminal device can send a random access request to a network device outside the second time period.

In one implementation, the availability information of the feeder link is born in broadcast information.

In a second aspect, the embodiments of the present application provide a satellite communication method, which includes: a network device sending availability information of a feeder link to a terminal device, the availability information of the feeder link being used to indicate whether the feeder link is available.

The positive effects obtained based on the method provided in the second aspect can be referred to the positive effects of the method provided in the first aspect, which will not be repeated here.

In one implementation, the availability information of the feeder link includes state information on availability of the feeder link and/or time information on availability of the feeder link; wherein, the state information on availability includes an available state or an unavailable state, and the time information on availability includes a first time period for the available state and/or a second time period for the unavailable state.

In one implementation, a terminal device is in connected state, and the availability information of the feeder link includes a first time period. In this case, within a first time before the ending time of the first time period, a network device sends release indication information to the terminal device, which is used to indicate release of a radio resource control RRC connection.

In one implementation, a terminal device is in connected state, and the availability information of the feeder link includes a second time period. In this case, within a second time before the beginning time of the second time period, a network device sends release indication information to the terminal device, which is used to indicate release of a radio resource control RRC connection.

In one implementation, a terminal device is in connected state, and the availability information of the feeder link includes a first time period. In this case, within a first time before the ending time of the first time period, a network device receives a request message from the terminal device for release of an RRC connection. The network device sends release indication information to the terminal device, which is used to indicate release of the RRC connection.

In one implementation, a terminal device is in connected state, and the availability information of the feeder link includes a second time period. In this case, within a second time before the beginning time of the second time period, a network device receives a request message from the terminal device for release of an RRC connection. The network device sends release indication information to the terminal device, which is used to indicate release of the RRC connection.

In one implementation, the availability information of a feeder link includes a first time period. Within the first time period, the network device receives a request message for resumption of RRC connection from a terminal device. The network device sends an RRC resumption confirmation message to the terminal device.

In one implementation, a terminal device is in idle state, and the availability information of a feeder link includes a first time period. In this case, within the first time period, a network device receives a random access request from the terminal device.

In one implementation, a terminal device is in idle state, and the availability information of a feeder link includes a second time period. In this case, a network device receives a random access request from the terminal device anytime outside the second time period.

In one implementation, the availability information of the feeder link is born in broadcast information, or the availability information of the feeder link is carried in dedicated signaling.

In a third aspect, the present application provides a satellite communication apparatus, comprising a unit for performing the method according to the first aspect or second aspect above.

In a fourth aspect, the present application provides a chip. The chip includes a processor and a communication interface. The processor is configured to cause the chip to perform the method according to the first aspect or the second aspect above.

In a fifth aspect, the present application provides a module device. The module device comprises a communication module, a power module, a storage module, and a chip, wherein: the power module is configured to provide power for the module device; the storage module is configured to store data and instructions; the communication module is configured for internal communication of the module device, or for communication between the module device and external devices; and the chip is configured to perform the method according to the first aspect or the second aspect above.

In a sixth aspect, the present application provides a computer-readable storage medium. The computer storage medium stores computer-readable instructions therein, when being executed on a communication apparatus, causing the communication apparatus to perform the method according to the first aspect or the second aspect above.

In a seventh aspect, a computer program or a computer program product is provided by the present application, including code or instructions, wherein the code or instructions, when being executed on a computer, cause the computer to perform the method according to the first aspect or the second aspect above.

In an eighth aspect, the present application provides a satellite communication apparatus, comprising a processor and a memory, the processor and the memory being interconnected, wherein the memory is configured to store a computer program, the computer program comprising program instructions, and the processor is configured for invoking the program instructions to execute the method according to the first aspect or second aspect above.

### BRIEF DESCRIPTION OF THE DRAWINGS

Figure 1 is a schematic architecture diagram of a communication system provided by an embodiment of the present application;
Figure 2 is a schematic diagram of a satellite system with a regenerative architecture provided by an embodiment of the present application;
Figure 3 is a schematic diagram of a feeder link and a service link provided by an embodiment of the present application;
Figure 4 is a schematic flowchart of a satellite communication method provided by an embodiment of the present application;
Figure 5 is a schematic structural diagram of a satellite communication apparatus provided by an embodiment of the present application;
Figure 6 is a schematic structural diagram of a satellite communication apparatus provided by an embodiment of the present application.

### DETAILED DESCRIPTION

The embodiments of the present application provide a method, apparatus, chip, and module device for satellite communication. In order to clarify the purpose, technical solution, and advantages of the present application, further detailed description of the present application will be provided below in conjunction with the accompanying drawings.

The terms "first" and "second" etc. used in the specification, claims, and drawings of the present application are intended to distinguish different objects and not to describe a specific order. In addition, the terms "including" and "having", as well as any variations thereof, are intended to cover non-exclusive inclusions. For example, processes, methods, systems, products, or devices that include a series of operations or units are not limited to the listed operations or units, but alternatively also include operations or units that are not listed, or alternatively include other operations or units inherent to these processes, methods, products, or devices.

Referring to "embodiment" in the present document means that specific features, structures, or characteristics described in conjunction with the embodiments may be included in at least one embodiment of the present application. The phrase appearing in various positions in the description does not necessarily refer to the same embodiment, nor is it an independent or alternative embodiment that is mutually exclusive with other embodiments. Technicians in this field explicitly and implicitly understand that the embodiments described in the present document can be combined with other embodiments.

In the present application, "at least one (item)" refers to one or more, "multiple" refers to two or more, "at least two (items)" refers to two or three or more. "And/or" is used to describe the corresponding relationship between corresponding objects, indicating that there can be three types of relationships. For example, "A and/or B" can represent: the existence of only A, only B, and the coexistence of A and B, wherein A and B can be singular or plural. The character "/" generally indicates an "or" relationship between the corresponding objects before and after the character. "At least one (item) of" or similar expressions refers to any combination of these items, including any combination of a single item or multiple items. For example, at least one of a, b, or c can represent: "a", "b", "c", "a and b", "a and c", "b and c", or "a and b and c", wherein a, b, and c can be single or multiple.

In order to better understand the embodiments of the present application, the system architecture of the embodiments of the present application will be first described below.

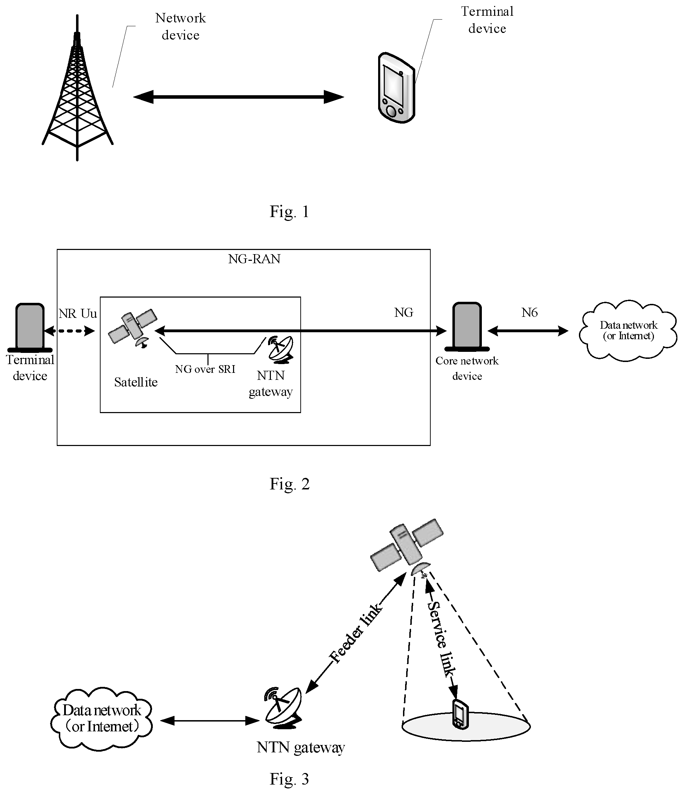

The methods provided in the embodiments of the present application can be applied to various communication systems, such as Internet of Things (IoT) systems, Narrowband Internet of Things (NB IoT) systems, Long Term Evolution (LTE) systems, Non-Terrestrial Networks (NTN) systems, Fifth Generation (5G) communication systems, LTE and 5G hybrid architectures, 5G New Radio (NR) systems, and new communication systems that may emerge in future communication development. FIG. 1 is a schematic architecture diagram of a communication system provided by an embodiment of the present application. The solutions in the present application may be applied to the communication system. The communication system may include network devices and terminal devices. Here, the number of network devices and terminal devices in Figure 1 is only schematic and cannot be considered as a specific limitation of the present application. Below is an explanation of the network device and the terminal device shown in Figure 1.

### 1. Terminal Device

A terminal device may be a device with transceiver functionality, and may also be referred to as a terminal, a user equipment (UE), a remote user equipment (remote UE), a relay user equipment (relay UE), an access terminal device, a user unit, a user station, a mobile station, a mobile platform, a remote station, a mobile device, a user terminal device, a smart terminal device, a wireless communication device, a user agent, or a user apparatus. It should be noted that a relay UE is a terminal device capable of providing services of relay forwarding for other terminal devices (including remote UEs).

As an example, the terminal device may be a mobile phone, a pad, a computer with wireless transceiver functionality, a Virtual Reality (VR) terminal device, an Augmented Reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in a smart city, a wireless terminal device in a smart home, etc.

As another example, the terminal device may also be a cellular phone, a cordless phone, a session initiation protocol (SIP) phone, a wireless local loop (WLL) station, a personal digital assistant (PDA), a handheld device with functionality of wireless communication, a computing device, or another processing device connected to a wireless modem, an in-vehicle device, a wearable device, and a terminal device in a next-generation communication system (e.g., an NR communication system, a 6G communication system), or a terminal device in a future evolved Public Land Mobile Network (PLMN), etc., which is not limited specifically herein.

In some implementations, the terminal device may be deployed on land, including indoor or outdoor, handheld, wearable, or vehicle-mounted; it may be deployed on water (e.g., ships, etc.); and it may be deployed in the air (e.g., aircraft, balloons, and satellites, etc.).

In some implementations, the terminal device may include an apparatus with functionality of wireless communication, e.g. a chip system, a chip, or a chip module. For example, the chip system may include a chip and may also include other discrete devices.

In some implementations, the terminal device described in the embodiments of the present application may be a chip, a chip module, an apparatus, a unit, etc., which is not limited specifically herein.

### 2. Network device

The network device in the embodiments of the present application is a device that provides wireless communication functions for terminal devices, and is also known as a radio access network (RAN) device or an access network device or an access network element. Here, the network device may support at least one wireless communication technology, such as LTE, NR, etc. For example, the network device includes but is not limited to: a next generation nodeB (gNB) in 5G, an evolved node B (eNB), a radio network controller (RNC), a node B (NB), a base station controller (BSC), a base transceiver station (BTS), a home base station (e.g. a home evolved node B or a home node B, HNB), a baseband unit (BBU), a TRP, a transmitting point (TP), a mobile switching center, etc. The network device can also be a non-terrestrial network device (such as a satellite) or an access network device in NTN. The network device may also be a wireless controller, a Centralized Unit (CU), and/or a Distributed Unit (DU) in a Cloud Radio Access Network (CRAN) scenario, or the access network device may be a relay station, an access point, a vehicle-mounted device, a terminal device, a wearable device, an access network device in future mobile communications, or an access network device in a future evolved PLMN, etc. In some embodiments, the network device may also be an apparatus that has the functionality of providing wireless communication for terminals device, such as a chip system. For example, the chip system may include a chip and may also include other discrete devices.

In some embodiments, network devices can also communicate with Internet Protocol (IP) networks, such as the Internet, private IP networks, or other data networks.

It should be noted that the interface between a terminal device and a network device is an air interface, and a terminal device can connect to one or more network devices. A network device can link multiple terminal devices and manage them. There are interfaces between network devices, which can be X2 interfaces (4G systems), Xn interfaces (5G systems), and other types of interfaces. There are interfaces between terminal devices, which can be PC5, Wireless Fidelity (WIFI), or other types of interfaces.

In order to facilitate the understanding of the technical solution in the present application, the following explanations and clarifications will be provided for some of the technical terms involved in the present application. It should be noted that these explanations are intended to make the embodiments of the present application easier to understand and should not be considered as limiting the scope of protection claimed by the present application.

### 1. NTN

NTN provides seamless communication coverage for terminal devices by deploying base stations or some base station functions on non-terrestrial network devices (such as satellites) to enhance the reliability of communication systems. It should be noted that, for ease of understanding, the following contents are described in the context where non-terrestrial network devices are satellites as examples in NTN, which should not be regarded as a specific limitation of the present application.

In the NTN system, satellite communication architecture can be divided into two categories based on the role of satellites in the system: 1. Transparent architecture. In this architecture, satellites serve as relays or amplifiers in the system, used for RF filtering or amplification, and for regenerating signals. 2. Regenerative architecture. In this architecture, satellites bear all or part of the functions (such as DU functions) of base stations in the system, and satellites in this architecture can be considered as base stations, DU, integrated access and backhaul (IAB) nodes, etc. for signal processing. Shown in Figure 2 is a schematic diagram of a satellite system with a regenerative architecture provided by the present application. In Figure 2, a base station (or known as a network device) is deployed on the satellite, which bears all the functions of the base station.

### 2. Feeder link and service link

In the NTN system, the link between the satellite and the terminal device is usually referred to as a service link, and the link between the satellite and the NTN gateway is called a feeder link. Here, data/signaling transmission on the service link is based on an air interface Uu protocol, while data/signaling transmission between a core network device and the base station (or satellite) on the feeder link is through an NG interface. Please refer to Figure 3, which is a schematic diagram of a feeder link and a service link provided in the present application.

In the NTN system, how to enable terminal devices to perceive the status of the feeder link and avoid unnecessary power consumption of terminal devices is an urgent problem to be solved. To address this issue, the present application provides a method, apparatus, chip, and module device for satellite communication. It should be noted that, in order to facilitate the explanation and understanding of the solutions in the embodiments of the present application, the present application is described in an NTN communication system where the base station is deployed on the satellite as an example, which should not be regarded as a specific limitation of the present application. When the base station is not deployed or not fully deployed on the satellite, the term "network device" hereinafter can also be replaced by "satellite".

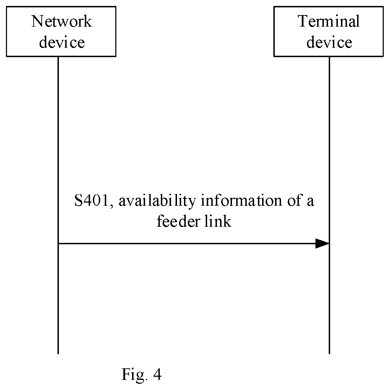

Provided below is a detailed description of the method, apparatus, chip, and module device for satellite communication provided by the embodiments of the present application. Referring to FIG. 4, FIG. 4 is a schematic flowchart of a satellite communication method provided by an embodiment of the present application. The method shown in Figure 4 can be performed by a terminal device or a chip in the terminal device. Alternatively, the method shown in Figure 4 can also be performed by a network device or a chip within a network device. Figure 4 is illustrated in the context where the method is performed by the terminal device and the network device as an example. As shown in Figure 4, the satellite communication method includes the following steps.

S401. A terminal device receives availability information of a feeder link from a network device.

Correspondingly, the network device sends the availability information of the feeder link to the terminal device. Here, the availability information of the feeder link includes state information on availability of the feeder link and/or time information on availability of the feeder link. It can be understood that the state information on availability of the feeder link is used to indicate whether the feeder link is available. The state information on availability includes an available state or an unavailable state. The time information on availability of the feeder link is used to indicate when the feeder link is in an available state or when it is in an unavailable state. The time information on availability includes a first time period during which the feeder link is in an available state and/or a second time period during which the feeder link is in an unavailable state.

In an implementation, the network device generates availability information of the feeder link according to result of its perception (or understood as detection) of the feeder link. Below are several examples of generating availability information of feeder links to assist in understanding the solution in the present application. It should be noted that the examples provided in the present application are for ease of understanding only and should not be considered as a specific limitation on the present application.

In Example 1, the network device detects a sudden failure in the feeder link (or understood as the feeder link being unavailable). Further, the network device generates availability information of the feeder link, which indicates that the feeder link is in an unavailable state.

In Example 2, the network device detects resumption of the feeder link (or understood as the feeder link being available). Further, the network device generates availability information of the feeder link, which indicates that the feeder link is in an available state.

In Example 3, the network device detects a sudden failure in the feeder link at a first time and determines that it takes approximately 1 hour to resolve the problem. Furthermore, the network device generates availability information of the feeder link, which indicates that the feeder link would be in an unavailable state within 1 hour from the first time (i.e., the second time period is a time period starting from the first time and lasting for 1 hour).

In Example 4, the network device learns at a second time that the NTN gateway will perform a system upgrade at a third time. Furthermore, the network device generates availability information of the feeder link, which indicates that the feeder link would be in an available state from the second time to the third time (i.e., the first time period is a time period between the second time and the third time).

In Example 5, the network device learns at a fourth time that the NTN gateway will perform a system upgrade at a fifth time and the system upgrade will last for 2 hours. Furthermore, the network device generates availability information of the feeder link, which indicates that the feeder link would be in an unavailable state within 2 hours from the fifth time (i.e., the second time period is a time period starting from the fifth time and lasting for 2 hours). The availability information of the feeder link can also indicate that the feeder link would be in an available state from a sixth time (i.e. a time that is 2 hours after the fifth time) (i.e. the first time period is a time period starting from the sixth time).

In an implementation of S401, terminal devices in Radio Resource Control (RRC) connected state and terminal devices in RRC idle state receive availability information of the feeder link from a network device in the same manner. For example, the network device sends availability information of the feeder link to various terminal devices through broadcasting. That is, the availability information of the feeder link may be interpreted as being born in broadcast information, or being born on broadcast channel.

In another implementation of S401, terminal devices in RRC connected state and terminal devices in RRC idle state receive availability information of feeder links from a network device in different ways. For example, the network device sends the availability information of the feeder link to terminal devices in RRC idle state through broadcasting, and sends the availability information of the feeder link to terminal devices in RRC connected state through dedicated signaling. Here, the dedicated signaling includes but is not limited to RRC signaling, downlink control information (DCI), or media access control (MAC) control element (CE), etc.

According to the state of the terminal device, the processing after receiving the availability information of the feeder link by the terminal device will be explained in two situations below. Wherein:
Situation 1: The terminal device is in RRC connected state.

After receiving the availability information of the feeder link, the terminal device in RRC connected state releases an RRC connection when the availability information of the feeder link indicates that the feeder link is unavailable. Here, the availability information of the feeder link indicating that the feeder link is unavailable, includes one or more of: indicating that the state information on availability of the feeder link is an unavailable state, indicating the first time period or indicating the second time period.

In one example, the availability information of the feeder link indicates that the feeder link is currently in an unavailable state. In this case, the terminal device in RRC connected state sends a request message to the network device for release of the RRC connection. After receiving the request message, the network device sends a release indication information to the terminal device. The terminal device releases the RRC connection according to the release indication information. Alternatively, the network device sends release indication information to the terminal device in RRC connected state. Here, the release indication information can be born in the same dedicated signaling as the availability information of the feeder link, or in different dedicated signaling, and the present application does not limit it. After receiving the release indication information, the terminal device releases the RRC connection according to the release indication information.

In another example, the availability information of the feeder link includes a first time period. In this case, the terminal device in RRC connected state can send a request message to the network device for release of the RRC connection at the end of the first time period or before the end of the first time period (e.g. within a first time before the ending time of the first time period). After receiving the request message, the network device sends release indication information to the terminal device. The terminal device releases the RRC connection according to the release indication information. Alternatively, at the end of the first time period or before the end of the first time period (e.g. within a first time before the ending time of the first time period), the network device sends release indication information to the terminal device in RRC connected state. After receiving the release indication information, the terminal device releases the RRC connection according to the release indication information. Here, the length of the first time and the length of a second time mentioned hereinafter can be adjusted according to specific application scenarios, and the present application does not have specific limitations on this.

In another example, the availability information of the feeder link includes a second time period. In this case, the terminal device in RRC connected state can send a request message to the network device for release of the RRC connection at the beginning of the second time period or before the beginning of the second time period (e.g. within a second time before the beginning time of the second time period). After receiving the request message, the network device sends release indication information to the terminal device. The terminal device releases the RRC connection according to the release indication information. Alternatively, at the beginning of the second time period or before the beginning of the second time period (e.g. within a second time before the beginning time of the second time period), the network device sends release indication information to the terminal device in RRC connected state. After receiving the release indication information, the terminal device releases the RRC connection according to the release indication information.

In another example, the availability information of the feeder link includes a first time period and a second time period. The terminal device in RRC connected state can send a request message to the network device for release of the RRC connection within a first time before the ending time of the first time period, or within a second time before the beginning time of the second time period, receive release indication information from the network device, and release the RRC connection. Alternatively, within a first time before the ending time of the first time period, or within a second time before the beginning time of the second time period, the terminal device receives release indication information sent by the network device, and releases the RRC connection according to the release indication information.

In an implementation, after the terminal device in RRC connected state releases the RRC connection, if the availability information of the feeder link includes the first time period (here, the first time period is a time period when the feeder link is in an available state beyond the release of the RRC connection), the terminal device sends a request message the network device for resumption of RRC connection within the first time period. Furthermore, the terminal device receives an RRC resumption confirmation message from the network device and resumes the RRC connection according to the RRC resumption confirmation message.

Here, the request message for resumption of RRC connection can also carry a resumption identifier (also known as a resume ID), which is used for a prompt resumption of the RRC connection between the terminal device and the network device. In an implementation, the terminal device obtains the resume ID from the network device, i.e. the terminal device receives the resume ID from the network device. Here, the resume ID can be carried in the aforementioned release indication information or the resume ID can be obtained from the network device during the RRC connection establishment process between the terminal device and the network device. The present application is not limited to this.

It should be understood that after a terminal device in RRC connected state releases the RRC connection, in case the context information of the terminal device is also released by the network device, the terminal device is in RRC idle state. When the availability information of the feeder link later indicates that the feeder link is available, the terminal device establishes an RRC connection by sending a random access request to the network device. After the terminal device in RRC connected state releases the RRC connection, in case the context information of the terminal device is not released by the network device, the RRC connection may be considered as being in a suspended state, that is, the terminal device is in RRC inactive state. When the availability information of the feeder link later indicates that the feeder link is available, the terminal device resumes the RRC connection by sending a request message to the network device for resumption of the RRC connection.

Situation 2: The terminal device is in RRC idle state.

After receiving the availability information of the feeder link, the terminal device in RRC idle state initiates a random access to the network device (i.e. sends a random access request to the network device) if the availability information of the feeder link indicates that the feeder link is available. Here, the availability information of the feeder link indicating that the feeder link is available, includes one or more of: indicating that the state information on availability of the feeder link is an available state, indicating a first time period or indicating a second time period.

In one example, the availability information of the feeder link indicates that the feeder link is currently in an available state. In this case, the terminal device in RRC idle state sends a random access request to the network device.

In another example, the availability information of the feeder link indicates a first time period. In this case, the terminal device in RRC idle state can send a random access request to the network device at the beginning of the first time period or at any time during the first time period.

In another example, the availability information of the feeder link indicates a second time period. In this case, the terminal device in RRC idle state can send a random access request to the network device at the end of the second time period or at any time other than the second time period (i.e. not within the second time period).

In another example, the availability information of the feeder link includes a first time period and a second time period. The terminal device in RRC idle state can send a random access request to the network device within the first time period (i.e. any time within the first time period) or at any time other than the second time period.

In implementations of the satellite communication method shown in Figure 4, the terminal device can perceive whether the feeder link is available according to the availability information of the feeder link indicated by the network device. The terminal device is prevented from blindly requesting to establish a connection to obtain network services when the feeder link is unavailable, and unnecessary overhead is avoided, which is conducive to power consumption saving at the terminal device.

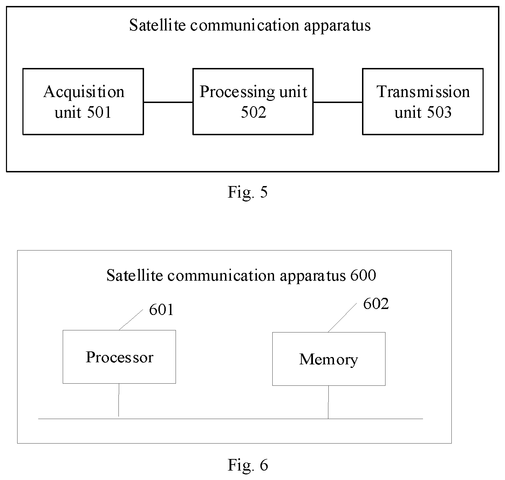

Please refer to Figure 5, which is a schematic diagram of the structure of a satellite communication apparatus provided in embodiments of the present invention. In one embodiment, the satellite communication apparatus is configured in a terminal device. The apparatus includes an acquisition unit 501, a processing unit 502, and a transmission unit 503. Here, the acquisition unit 501 is configured to receive availability information of the feeder link from a network device, which is used to indicate whether the feeder link is available.

In one implementation, the availability information of the feeder link includes state information on availability of the feeder link and/or time information on availability of the feeder link. Here, the state information on availability includes an available state or an unavailable state, and the time information on availability includes a first time period for the available state and/or a second time period for the unavailable state.

In one implementation, the processing unit 502 is configured to release a radio resource control RRC connection when the availability information of the feeder link indicates that the feeder link is unavailable.

In one implementation, the availability information of the feeder link includes a first time period. The acquisition unit 501 is configured to receive release indication information from the network device within a first time before the ending time of the first time period. The processing unit 502 is configured to release the RRC connection according to the release indication information.

In one implementation, the availability information of the feeder link includes a second time period. The acquisition unit 501 is configured to receive release indication information from the network device within a second time before the beginning time of the second time period. The processing unit 502 is configured to release the RRC connection according to the release indication information.

In one implementation, the availability information of the feeder link includes a first time period. The transmission unit 503 is configured to send a request message to a network device for release of the RRC connection, within a first time before the ending time of the first time period. The acquisition unit 501 is also configured to receive release indication information from the network device. The processing unit 502 is configured to release the RRC connection according to the release indication information.

In one implementation, the availability information of the feeder link includes a second time period. The transmission unit 503 is configured to send a request message to a network device for release of the RRC connection, within a second time before the beginning time of the second time period. The acquisition unit 501 is also configured to receive release indication information from the network device. The processing unit 502 is configured to release the RRC connection according to the release indication information.

In one implementation, the availability information of the feeder link includes a first time period. The transmission unit 503 is configured to send a request message for resumption of RRC connection to the network device within the first time period. The acquisition unit 501 is also configured to receive an RRC resumption confirmation message from the network device. The processing unit 502 is configured to resume the RRC connection according to the RRC resumption confirmation message.

In one implementation, the availability information of the feeder link is born in broadcast information, or the availability information of the feeder link is carried in dedicated signaling.

In one implementation, the transmission unit 503 is also configured to send a random access request to the network device when the feeder link is available.

In one implementation, the availability information of the feeder link includes a first time period. The transmission unit 503 is also configured to send a random access request to a network device within the first time period.

In one implementation, the availability information of the feeder link includes a second time period. The transmission unit 503 is also configured to send a random access request to a network device outside the second time period.

In one implementation, the availability information of the feeder link is born in broadcast information.

In the embodiment, the functions of each unit module of the satellite communication apparatus described can be specifically implemented according to the method at the terminal device in the method embodiment of Figure 4, and the specific implementation process thereof can be referred to the relevant descriptions of the method embodiment of Figure 4, which will not be repeated here.

In another embodiment, the satellite communication apparatus is configured in a network device. The apparatus includes an acquisition unit 501, a processing unit 502, and a transmission unit 503. Here, the transmission unit 503 is configured to send the availability information of a feeder link to the terminal device, and generate the availability information of the feeder link, the availability information of the feeder link is used to indicate whether the feeder link is available.

In one implementation, the availability information of the feeder link includes state information on availability of the feeder link and/or time information on availability of the feeder link. Here, the state information on availability includes an available state or an unavailable state, and the time information on availability includes a first time period for the available state and/or a second time period for the unavailable state.

In one implementation, a terminal device is in connected state, and the availability information of the feeder link includes a first time period. The transmission unit 503 is configured to send release indication information to the terminal device within a first time before the ending time of the first time period, the release indication information is used to indicate release of a radio resource control RRC connection.

In one implementation, a terminal device is in connected state, and the availability information of the feeder link includes a first time period. The transmission unit 503 is configured to send release indication information to the terminal device within a second time before the beginning time of the second time period, the release indication information is used to indicate release of a radio resource control RRC connection.

In one implementation, a terminal device is in connected state, and the availability information of the feeder link includes a first time period. The acquisition unit 501 is configured to receive a request message from the terminal device for release of an RRC connection, within a first time before the ending time of the first time period. The transmission unit 503 is also configured to send release indication information to the terminal device, which is used to indicate release of the RRC connection.

In one implementation, a terminal device is in connected state, and the availability information of the feeder link includes a first time period. The acquisition unit 501 is configured to receive a request message from the terminal device for release of an RRC connection, within a second time before the beginning time of the second time period. The transmission unit 503 is also configured to send release indication information to the terminal device, which is used to indicate the release of the RRC connection.

In one implementation, the availability information of the feeder link includes a first time period. The acquisition unit 501 is also configured to receive a request message for resumption of RRC connection from the terminal device within the first time period. The transmission unit 503 is also configured to send an RRC resumption confirmation message to the terminal device.

In one implementation, a terminal device is in idle state, and the availability information of a feeder link includes a first time period. The acquisition unit 501 is also configured to receive a random access request from the terminal device within the first time period.

In one implementation, a terminal device is in idle state, and the availability information of a feeder link includes a second time period. The acquisition unit 501 is also configured to receive a random access request from the terminal device outside the second time period.

In one implementation, the availability information of the feeder link is born in broadcast information, or the availability information of the feeder link is carried in dedicated signaling.

In the embodiment, the functions of each unit module of the satellite communication apparatus described can be specifically implemented according to the method at the network device in the method embodiment of Figure 4, and the specific implementation process thereof can be referred to the relevant descriptions of the method embodiment of Figure 4, which will not be repeated here.

The embodiments of the present application also provide a chip, and the chip may perform the relevant steps of the terminal device in the method embodiments mentioned above.

In one embodiment, the chip is configured to receive availability information of a feeder link from a network device, which is used to indicate whether the feeder link is available.

In one implementation, the availability information of the feeder link includes state information on availability of the feeder link and/or time information on availability of the feeder link; wherein, the state information on availability includes an available state or an unavailable state, and the time information on availability includes a first time period for the available state and/or a second time period for the unavailable state.

In one implementation, the chip is further configured to release the radio resource control RRC connection when the availability information of the feeder link indicates that the feeder link is unavailable.

In one implementation, the availability information of the feeder link includes a first time period. The chip is also configured to: receive release indication information from the network device within a first time before the ending time of the first time period; and release the RRC connection according to the release indication information.

In one implementation, the availability information of the feeder link includes a second time period. The chip is also configured to: receive release indication information from the network device within a second time before the beginning time of the second time period; and release the RRC connection according to the release indication information.

In one implementation, the availability information of the feeder link includes a first time period. The chip is also configured to: send a request message to a network device for release of the RRC connection, within a first time before the ending time of the first time period; receive release indication information from the network device; and release the RRC connection according to the release indication information.

In one implementation, the availability information of the feeder link includes a first time period. The chip is also configured to: send a request message to a network device for release of the RRC connection, within a second time before the beginning time of the second time period; receive release indication information from the network device; and release the RRC connection according to the release indication information.

In one implementation, the availability information of the feeder link includes a first time period. The chip is also configured to: send a request message for resumption of RRC connection to the network device within the first time period; receive an RRC resumption confirmation message from the network device; and resume the RRC connection according to the RRC resumption confirmation message.

In one implementation, the availability information of the feeder link is born in broadcast information, or the availability information of the feeder link is carried in dedicated signaling.

In one implementation, the chip is also configured to send a random access request to the network device when the feeder link is available.

In one implementation, the availability information of the feeder link includes a first time period. The chip is also configured to send a random access request to a network device within the first time period.

In one implementation, the availability information of the feeder link includes a second time period. The chip is also configured to send a random access request to a network device outside the second time period.

In one implementation, the availability information of the feeder link is born in broadcast information.

The embodiments of the present application also provide a chip module that can be applied in terminal devices, comprising the above-mentioned chips that can be applied in terminal devices.

In another embodiment, the chip is configured to send availability information of a feeder link to a terminal device, which is used to indicate whether the feeder link is available.

In one implementation, the availability information of the feeder link includes state information on availability of the feeder link and/or time information on availability of the feeder link; wherein, the state information on availability includes an available state or an unavailable state, and the time information on availability includes a first time period for the available state and/or a second time period for the unavailable state.

In one implementation, a terminal device is in connected state, and the availability information of the feeder link includes a first time period. The chip is further configured to send release indication information to the terminal device within a first time before the ending time of the first time period, which is used to indicate release of the radio resource control RRC connection.

In one implementation, a terminal device is in connected state, and the availability information of the feeder link includes a second time period. The chip is further configured to send release indication information to the terminal device within a second time before the beginning time of the second time period, which is used to indicate release of the radio resource control RRC connection.

In one implementation, a terminal device is in connected state, and the availability information of the feeder link includes a first time period. The chip is also configured to: receive a request message from the terminal device for release of an RRC connection, within a first time before the ending time of the first time period or within a second time before the beginning time of the second time period; and send release indication information to the terminal device, which is used to indicate release of the RRC connection.

In one implementation, a terminal device is in connected state, and the availability information of the feeder link includes a second time period. The chip is also configured to: receive a request message from the terminal device for release of an RRC connection, within a second time before the beginning time of the second time period; and send release indication information to the terminal device, which is used to indicate release of the RRC connection.

In one embodiment, the availability information of a feeder link includes a first time period. The chip is also configured to: receive a request message for resumption of RRC connection from a terminal device within the first time period; and send an RRC resumption confirmation message to the terminal device.

In one implementation, a terminal device is in idle state, and the availability information of a feeder link includes a first time period. The chip is also configured to receive a random access request from the terminal device within the first time period.

In one implementation, a terminal device is in idle state, and the availability information of a feeder link includes a second time period. The chip is also configured to receive a random access request from the terminal device outside the second time period.

In one implementation, the availability information of the feeder link is born in broadcast information, or the availability information of the feeder link is carried in dedicated signaling.

The embodiments of the present application also provide a chip module that can be applied in network devices, comprising the above-mentioned chips that can be applied in network devices.

Referring to FIG. 6, FIG. 6 is a schematic structural diagram of a satellite communication apparatus provided by embodiments of the present application. The satellite communication apparatus 600 described in the embodiments of the present application includes a processor 601 and a memory 602, which are connected through one or more communication buses.

The above processor 601 may be a Central Processing Unit (CPU), or the processor may also be another general-purpose processor, a Digital Signal Processor (DSP), an Application Specific Integrated Circuit (ASIC), a Field-Programmable Gate Array (FPGA), or another programmable logic device, discrete gate or transistor logic device, discrete hardware component, etc. A general-purpose processor may be a microprocessor, or the processor may be any conventional processor, etc. The processor 601 is configured to support user equipments in executing the corresponding functions of terminal devices in the method of Figure 4, or to execute the corresponding functions of network devices in the method of Figure 4.

The above memory 602 may include read-only memory and random access memory, and provides computer programs and data to the processor 601. A part of the memory 602 may also include non-volatile random access memory.

In one embodiment, the processor 601, when invoking a computer program, is configured to: receive availability information of a feeder link from a network device, which is used to indicate whether the feeder link is available.

In one implementation, the availability information of the feeder link includes state information on availability of the feeder link and/or time information on availability of the feeder link; wherein, the state information on availability includes an available state or an unavailable state, and the time information on availability includes a first time period for the available state and/or a second time period for the unavailable state.

In one implementation, when the availability information of the feeder link indicates that the feeder link is unavailable, the radio resource control RRC connection is released.

In one implementation, the availability information of the feeder link includes a first time period. Within a first time before the ending time of the first time period, release indication information is received from the network device; and the RRC connection is released according to the release indication information.

In one implementation, the availability information of the feeder link includes a second time period. Within a second time before the beginning time of the second time period, release indication information is received from the network device; and the RRC connection is released according to the release indication information.

In one implementation, the availability information of the feeder link includes a first time period. Within a first time before the ending time of the first time period, a request message is sent to a network device for release of the RRC connection; release indication information is received from the network device; and the RRC connection is released according to the release indication information.

In one implementation, the availability information of the feeder link includes a second time period. Within a second time before the beginning time of the second time period, a request message is sent to a network device for release of the RRC connection; release indication information is received from the network device; and the RRC connection is released according to the release indication information.

In one implementation, the availability information of the feeder link includes a first time period. Within the first time period, a request message for resumption of RRC connection is sent to the network device; an RRC resumption confirmation message is received from the network device; and the RRC connection is resumed according to the RRC resumption confirmation message.

In one implementation, the availability information of the feeder link is born in broadcast information, or the availability information of the feeder link is carried in dedicated signaling.

In one implementation, a random access request is sent to the network device when the feeder link is available.

In one implementation, the availability information of the feeder link includes a first time period, and a random access request is sent to a network device within the first time period.

In one implementation, the availability information of the feeder link includes a second time period, and a random access request is sent to a network device outside the second time period.

In one implementation, the availability information of the feeder link is born in broadcast information.

The embodiments of the present application also provide a chip module that can be applied in terminal devices, comprising the above-mentioned chips that can be applied in terminal devices.

In one embodiment, the processor 601, when invoking a computer program, is configured to: send availability information of a feeder link to a terminal device, which is used to indicate whether the feeder link is available.

In one implementation, the availability information of the feeder link includes state information on availability of the feeder link and/or time information on availability of the feeder link; wherein, the state information on availability includes an available state or an unavailable state, and the time information on availability includes a first time period for the available state and/or a second time period for the unavailable state.

In one implementation, a terminal device is in connected state, and the availability information of the feeder link includes a first time period. Release indication information is sent to the terminal device within a first time before the ending time of the first time period, which is used to indicate release of the radio resource control RRC connection.

In one implementation, a terminal device is in connected state, and the availability information of the feeder link includes a second time period. Release indication information is sent to the terminal device within a second time before the beginning time of the second time period, which is used to indicate release of the radio resource control RRC connection.

In one implementation, a terminal device is in connected state, and the availability information of the feeder link includes a first time period. A request message is received from the terminal device for release of an RRC connection, within a first time before the ending time of the first time period or within a second time before the beginning time of the second time period; and release indication information is sent to the terminal device, which is used to indicate release of the RRC connection.

In one implementation, a terminal device is in connected state, and the availability information of the feeder link includes a second time period. A request message is received from the terminal device for release of an RRC connection, within a second time before the beginning time of the second time period; and release indication information is sent to the terminal device, which is used to indicate release of the RRC connection.

In one implementation, the availability information of a feeder link includes a first time period. Within the first time period, a request message for resumption of RRC connection is received from a terminal device; and an RRC resumption confirmation message is sent to the terminal device.

In one implementation, a terminal device is in idle state, and the availability information of a feeder link includes a first time period. A random access request is received from the terminal device within the first time period.

In one implementation, a terminal device is in idle state, and the availability information of a feeder link includes a second time period. A random access request is received from the terminal device outside the second time period.

In one implementation, the availability information of the feeder link is born in broadcast information, or the availability information of the feeder link is carried in dedicated signaling.

In specific implementations, the processor 601 and memory 602 described in the embodiments of the present invention can execute the implementation described in the method embodiment of Figure 4 provided in the embodiments of the present invention, and can also execute the implementation method of the satellite communication apparatus described in Figure 5 provided in the embodiments of the present invention, which will not be repeated here.

The embodiments of present application also provide a computer-readable storage medium, which stores a computer program. When the computer program is executed by a processor, it can be used to implement the satellite communication method described in the corresponding embodiment of Figure 4 of the embodiments of present application, and will not be further described here.

The computer-readable storage medium may be the internal storage unit of the computer device of any of the aforementioned embodiments, such as the device's hard disk or memory. The computer-readable storage medium can also be external storage devices of computer devices, such as plug-in hard drives, Smart Media Cards (SMC), Secure Digital (SD) cards, Flash Cards, etc. equipped on the device. Furthermore, the computer-readable storage medium can also include both internal storage units of computer devices and external storage devices. The computer-readable storage medium is used to store computer programs and other programs and data required by computer devices. The computer-readable storage medium can also be used to temporarily store data that has been or to be output.

The embodiments of the present application also provide a computer program product, and when the computer program product is executed on a processor, the method flows of the method embodiments mentioned above are implemented.

Regarding the various modules/units included in various apparatuses and products described in the above embodiments, they may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal device, each module/unit included may be implemented in hardware such as circuits, different modules/units may be located in the same component (e.g., chip, circuit module, etc.) or different components of the terminal device, or at least some modules/units may be implemented by software programs executing on a processor integrated into the terminal device, and the remaining (if any) modules/units may be implemented in hardware such as circuits.

Ordinary technical personnel in this field can understand that the implementation of all or part of the process in the above embodiments methods can be completed by instructing relevant hardware through computer programs. The program can be stored in a readable storage medium, and when executed, it can include the processes of the embodiments of above methods. Here, the storage medium can be magnetic disk, optical disk, Read Only Memory (ROM) or Random Access Memory (RAM), etc.

Finally, it should be noted that: the above embodiments are only intended to illustrate the technical solutions of the present application, but not to pose limitations on them. Although detailed description of the present application has been illustrated with reference to the above embodiments, those of ordinary skill in the art should understand that they may still modify the technical solutions described in the above embodiments, or replace some or all of the technical features equivalently. Such modifications or replacements do not deviate the essence of the corresponding technical solutions from the scope of the technical solutions of the embodiments of the present application.

## Claims

1. A satellite communication method, **characterized in that** the method comprises:
receiving availability information of a feeder link from a network device, the availability information of the feeder link for indicating whether the feeder link is available.

2. The method according to claim 1, **characterized in that** the availability information of the feeder link includes state information on availability of the feeder link and/or time information on availability of the feeder link;
wherein, the state information on availability includes an available state or an unavailable state, and the time information on availability includes a first time period for the available state and/or a second time period for the unavailable state.

3. The method according to claim 1 or 2, **characterized in that** releasing a radio resource control RRC connection when the availability information of the feeder link indicates that the feeder link is unavailable.

4. The method according to claim 3, **characterized in that** the availability information of the feeder link includes the first time period, and releasing a radio resource control RRC connection when the availability information of the feeder link indicates that the feeder link is unavailable, comprising:
receiving release indication information from the network device within a first time before ending time of the first time period; and
releasing the RRC connection according to the release indication information.

5. The method according to claim 3, **characterized in that** the availability information of the feeder link includes the second time period, and releasing a radio resource control RRC connection when the availability information of the feeder link indicates that the feeder link is unavailable, comprising:
receiving release indication information from the network device within a second time before beginning time of the second time period; and
releasing the RRC connection according to the release indication information.

6. The method according to claim 3, **characterized in that** the availability information of the feeder link includes the first time period, and releasing a radio resource control RRC connection when the availability information of the feeder link indicates that the feeder link is unavailable, comprising:
sending a request message to the network device within a first time before ending time of the first time period, the request message for release of the RRC connection;
receiving release indication information from the network device; and
releasing the RRC connection according to the release indication information.

7. The method according to claim 3, **characterized in that** the availability information of the feeder link includes the second time period, and releasing a radio resource control RRC connection when the availability information of the feeder link indicates that the feeder link is unavailable, comprising:
sending a request message to the network device within a second time before beginning time of the second time period, the request message for release of the RRC connection;
receiving release indication information from the network device; and
releasing the RRC connection according to the release indication information.

8. The method according to any one of claim 3 to claim 7, **characterized in that** the availability information of the feeder link includes the first time period, and the method further comprises:
sending a request message for resumption of RRC connection to the network device within the first time period;
receiving an RRC resumption confirmation message from the network device; and
resuming the RRC connection according to the RRC resumption confirmation message.

9. The method according to any one of claim 3 to claim 8, **characterized in that** the availability information of the feeder link is born in broadcast information, or the availability information of the feeder link is carried in dedicated signaling.

10. The method according to claim 1 or 2, **characterized in that** sending a random access request to the network device when the feeder link is available.

11. The method according to claim 10, **characterized in that** the availability information of the feeder link includes the first time period, and sending a random access request to the network device when the feeder link is available, comprising:
sending the random access request to the network device within the first time period.

12. The method according to claim 10, **characterized in that** the availability information of the feeder link includes the second time period, and sending a random access request to the network device when the feeder link is available, comprising:
sending the random access request to the network device outside the second time period.

13. The method according to any one of claim 10 to claim 12, **characterized in that** the availability information of the feeder link is born in broadcast information.

14. A satellite communication method, **characterized in that** the method comprises:
sending availability information of a feeder link to a terminal device, the availability information of the feeder link for indicating whether the feeder link is available.

15. The method according to claim 14, **characterized in that** the availability information of the feeder link includes state information on availability of the feeder link and/or time information on availability of the feeder link;
wherein, the state information on availability includes an available state or an unavailable state, and the time information on availability includes a first time period for the available state and/or a second time period for the unavailable state.

16. The method according to claim 15, **characterized in that** the terminal device is in a connected state, and the availability information of the feeder link includes the first time period, and the method further comprises:
sending release indication information to the terminal device within a first time before ending time of the first time period, the release indication information for indicating release of a Radio Resource Control RRC connection.

17. The method according to claim 15, **characterized in that** the terminal device is in a connected state, and the availability information of the feeder link includes the second time period, and the method further comprises:
sending release indication information to the terminal device within a second time before beginning time of the second time period, the release indication information for indicating release of a Radio Resource Control RRC connection.

18. The method according to claim 15, **characterized in that** the terminal device is in a connected state, and the availability information of the feeder link includes the first time period, and the method further comprises:
receiving a request message from the terminal device within a first time before ending time of the first time period, the request message for release of an RRC connection; and
sending release indication information to the terminal device, the release indication information for indicating release of the RRC connection.

19. The method according to claim 15, **characterized in that** the terminal device is in a connected state, and the availability information of the feeder link includes the second time period, and the method further comprises:
receiving a request message from the terminal device within a second time before beginning time of the second time period, the request message for release of an RRC connection; and
sending release indication information to the terminal device, the release indication information for indicating release of the RRC connection.

20. The method according to any one of claim 16 to claim 19, **characterized in that** the availability information of the feeder link includes the first time period, and the method further comprises:
receiving a request message for resumption of RRC connection from the terminal device within the first time period; and
sending an RRC resumption confirmation message to the terminal device.

21. The method according to claim 15, **characterized in that** the terminal device is in an idle state, and the availability information of the feeder link includes the first time period, and the method further comprises:
receiving a random access request from the terminal device within the first time period.

22. The method according to claim 15, **characterized in that** the terminal device is in an idle state, and the availability information of the feeder link includes the second time period, and the method further comprises:
receiving a random access request from the terminal device outside the second time period.

23. The method according to any one of claim 14 to claim 22, **characterized in that** the availability information of the feeder link is born in broadcast information, or the availability information of the feeder link is carried in dedicated signaling.

24. A satellite communication apparatus, **characterized in that** the apparatus is deployed on a terminal device and comprises:
an acquisition unit, configured to receive availability information of a feeder link from a network device, the availability information of the feeder link for indicating whether the feeder link is available.

25. A satellite communication apparatus, **characterized in that** the apparatus is deployed on a network device and comprises:
a transmission unit, configured to send availability information of a feeder link to a terminal device, the availability information of the feeder link for indicating whether the feeder link is available.

26. A chip , **characterized in that** the chip comprises a processor and a communication interface, wherein the processor is configured to cause the chip to perform a method according to any one of claims 1-13, or the processor is configured to cause the chip to perform a method according to any one of claims 14-23.

27. A module device, **characterized in that** the module device comprises a communication module, a power module, a storage module, and a chip, wherein:
the power module is configured to provide power for the module device;
the storage module is configured to store data and instructions;
the communication module is configured for internal communication in the module device, or for communication between the module device and external devices; and
the chip is configured to perform the method according to any one of claims 1-13, or the chip is configured to perform the method according to any one of claims 14-23.

28. A satellite communication apparatus, **characterized in that** the apparatus comprises a processor and a memory, the processor and the memory being interconnected, wherein the memory is configured to store a computer program, the computer program comprising program instructions, and the processor is configured to invoke the program instructions to perform the method according to any one of claims 1 to 13, or to perform the method according to any one of claims 14 to 23.

29. A computer-readable storage medium, **characterized in that** the computer-readable storage medium stores a computer program comprising program instructions that, when executed by a processor, cause the processor to perform a method according to any one of claims 1-13, or to perform a method according to any one of claims 14-23.

30. A computer program product **characterized in that** the computer program product comprises code or instructions that, when executed on a computer, cause the computer to perform a method according to any one of claims 1-13, or to perform a method according to any one of claims 14-23.
